# FASCICULE DE BREVET EUROPEEN

(11) **EP 2 855 341 B1**
(45) Date de publication et mention de la délivrance du brevet: **30.03.2016**
(21) Numéro de dépôt: 13731385.4
(22) Date de dépôt: 31.05.2013
(51) Int. Cl.: B67B 7/48, B65B 3/00, G01N 35/10, B67B 7/00

(54) **SYSTEME DE PERÇAGE D'UN OPERCULE.**
SYSTEM ZUM DURCHSTECHEN EINER MEMBRAN
SYSTEM FOR PIERCING A MEMBRANE

(30) Priorité: 31.05.2012 FR 1255032
(43) Date de publication de la demande: 08.04.2015
(73) Titulaire: DiaMed GmbH, 1785 Cressier (CH)
(72) Inventeur: BRISEBRAT, Jean-Michel, F-42460 Villers (FR); GAGNEPAIN, Cédric, F-42153 Riorges (FR); BARTHELON, Pascal, F-42720 Nandax (FR)
(74) Mandataire: Henrich, Christel
(86) Numéro de dépôt international: PCT/FR2013/051231
(87) Numéro de publication internationale: WO 2013/178961

(56) Documents cités:
- WO-A2-2010/116069
- DE-A1- 2 151 729
- US-A1- 2001 039 977

## Description

La présente invention concerne le domaine des appareils pour réaliser des analyses médicales.

En particulière, la présente invention concerne un système de perçage d'au moins un opercule fermant au moins une cavité d'un réceptacle selon le préambule de la revendication 1 et le procédé correspondant.

Traditionnellement, de tels appareils, également appelés automates d'analyses, permettent d'automatiser certains protocoles, comme par exemple le perçage de l'opercule d'un réceptacle et le pipetage de liquides, notamment un échantillon sanguin ou tout autre type de prélèvement humain, dans ce réceptacle contenant initialement un ou plusieurs réactifs.

Le dispositif et le procédé selon l'invention sont particulièrement adaptés au perçage de l'opercule d'une carte gel.

De manière connue, une carte gel est un réceptacle muni d'un ou plusieurs puits réactionnels initialement obturés par un opercule et contenant un réactif pouvant être différent d'un puits à l'autre d'une même carte gel.

Le remplissage d'une telle carte gel doit respecter certains critères, notamment la création d'une poche d'air (air-gap en anglais) entre la dose de liquide dispensée et le réactif préalablement présent au fond du puits de la carte gel. La présence d'une poche d'air a pour effet d'interdire provisoirement le contact physique entre la dose de liquide dispensée et le réactif. Un intérêt est de maîtriser l'instant à partir duquel la réaction chimique doit débuter.

Un autre critère à respecter lors du remplissage est l'absence d'éclaboussures de liquide sur la paroi interne du puits, et ce, dans le but d'éviter qu'une fraction de la dose de liquide ne reste accrochée aux parois du puits et soit ainsi soustraite au mélange réactionnel qui sera incubé et centrifugé. Les éclaboussures proviennent le plus souvent d'un fractionnement plus ou moins important, mais toujours aléatoire, de la dose de liquide dispensée dans le puits.

Aujourd'hui, on sait que la formation d'éclaboussures sur les parois internes d'un puits peut être évitée par la suppression des charges électrostatiques sur ledit réceptacle. Les charges électrostatiques portées par le réceptacle ont en effet tendance à disloquer la dose de liquide au moment où elle quitte les moyens de remplissage. In s'ensuit que certaines fractions de la dose viennent se coller contre la paroi interne du puits, en raison des forces d'attraction créées par les charges électrostatiques. La formation de la poche d'air entre la dose de liquide dispensée et le réactif préalablement présent au fond du réceptacle, est également favorisée par l'absence de force électrostatique tendant à dévier la dose lâchée par les moyens de remplissage. La demande de brevet publiée sous le numéro WO 2010/116069 décrit un dispositif selon le préambule de la revendication 1 et un procédé de remplissage d'une carte gel initialement fermée par un opercule. Le dispositif décrit comprend des moyens de perçage de l'opercule, et d'autres moyens destinés à supprimer les charges électrostatiques susceptibles d'être portées par les puits de la carte gel, avant les opérations de dispense.

Un objectif de la présente invention est de fournir un système amélioré par rapport au dispositif de l'art antérieur.

En particulier, un objectif de la présente invention est de fournir un système permettant de conditionner un réceptacle de type carte gel, initialement fermé par un opercule, avant son remplissage, encore plus rapidement et plus efficacement qu'avec le dispositif de l'art antérieur.

Cet objectif est atteint avec un système de perçage d'au moins un opercule fermant au moins une cavité d'un réceptacle, ledit système comportant un organe de perçage configuré pour perforer l'opercule et un dispositif ionisant pour supprimer les charges électrostatiques susceptibles d'être portées par ladite cavité, ce dispositif ionisant comprenant l'organe de perçage qui est adapté pour présenter des propriétés ionisantes.

Avec le système selon l'invention, l'opération de perçage de l'opercule obturant le réceptacle et l'opération d'ionisation dudit réceptacle sont réalisées à l'aide d'un seul et même organe que l'on nomme dispositif ionisant dans le présent exposé.

D'une part, le dispositif ionisant est adapté pour générer un flux d'ions de charge alternativement positive et négative, ce flux d'ions étant transmis au réceptacle par l'air ambiant. Cette alternance de charges permet de supprimer les charges électrostatiques portées par les parois du réceptacle.

D'autre part, le dispositif ionisant est conformé de manière à pouvoir percer l'opercule du réceptacle à remplir.

Ces deux opérations peuvent donc être réalisées simultanément ou tout du moins au cours d'une seule et même étape.

Grâce à ces dispositions, en outre, le dispositif ionisant vient au contact de l'opercule et s'approche donc très près de la cavité du réceptacle, voire même y pénètre. Par ailleurs, l'axe du dispositif d'ionisation peut être aligné avec celui du réceptacle. L'ionisation est ainsi bien plus efficace et plus rapide que dans le dispositif de l'art antérieur, dans lequel la rampe d'ionisation était nécessairement éloignée des puits de carte gel et inclinée par rapport à ceux-ci.

Dans certains modes de réalisation, l'organe de perçage comprend une pointe de perçage destinée à pénétrer dans la cavité du réceptacle en traversant l'opercule.

Dans certains modes de réalisation, le dispositif ionisant comprend en outre des pointes ionisantes non-perçantes entourant la pointe de perçage.

Dans certains modes de réalisation, le réceptacle est une carte gel qui comporte une pluralité de puits fermés par un opercule, chacun des puits contenant un ou plusieurs réactifs, et la cavité est un puits de ladite carte gel.

Selon un mode de réalisation, l'organe de perçage est relié à un générateur de tension. De préférence, l'organe de perçage est adapté à être porté à un potentiel électrique engendrant un effet corona.

L'invention concerne également un procédé de perçage d'au moins un opercule fermant au moins une cavité d'un réceptacle, comprenant le perçage de l'opercule afin d'ouvrir ladite cavité et la suppression des charges électrostatiques susceptibles d'être portées par ladite cavité, dans lequel le perçage de l'opercule et la suppression des charges électrostatiques sont réalisés à l'aide d'un même organe de perçage adapté pour présenter des propriétés ionisantes.

Selon l'invention, la suppression des charges électrostatiques (i.e. l'ionisation) de la cavité du réceptacle est réalisée pendant et/ou après le perçage.

Généralement, le perçage de l'opercule et la suppression des charges électrostatiques sont réalisés de façon concomitante.

Selon un exemple de mise en oeuvre, l'organe de perçage et la cavité du réceptacle sont placés en regard l'un de l'autre, et l'organe de perçage est introduit à l'intérieur de la cavité puis en est extrait, ce par quoi l'opercule fermant ladite cavité est percé, l'organe de perçage présentant des propriétés ionisantes à au moins un instant entre le début de l'introduction de l'organe de perçage à l'intérieur de la cavité et la fin du retrait de l'organe de perçage hors de la cavité.

L'organe de perçage comprend usuellement un élément conducteur présentant des propriétés ionisantes lorsqu'il est porté à un potentiel électrique, notamment à un potentiel électrique engendrant un effet corona. Le potentiel électrique appliqué à l'organe de perçage peut être contrôlé et modulé selon les besoins au cours de la mise en oeuvre du procédé. L'organe de perçage peut ainsi présenter ses propriétés ionisantes ponctuellement ou en continu.

Selon un exemple de mise en oeuvre avantageux, l'organe de perçage présente des propriétés ionisantes de façon continue ou sensiblement continue entre le début de l'introduction de l'organe de perçage à l'intérieur de la cavité et la fin du retrait de l'organe de perçage hors de la cavité.

Selon certains modes de mise en oeuvre, le procédé comprend au moins la succession d'étapes suivantes:
- on place l'organe de perçage et le réceptacle dans une position d'entrée,
- on introduit l'organe de perçage à l'intérieur de la cavité jusque dans une position enfoncée dans laquelle l'opercule est percé, et
- on extrait l'organe de perçage de la cavité et on place l'organe de perçage et le réceptacle dans une position de sortie.

Une position d'entrée est une position dans laquelle l'organe de perçage est situé au voisinage de l'entrée de la cavité, notamment en regard de ladite cavité, plus particulièrement encore aligné avec l'axe de ladite cavité.

De la même manière, une position de sortie est une position dans laquelle l'organe de perçage est situé au voisinage de l'entrée de la cavité, notamment en regard de ladite cavité, plus particulièrement aligné avec l'axe de ladite cavité.

Selon certains modes de mise en oeuvre,
- on place l'organe de perçage dans une position d'entrée au-dessus de l'opercule,
- on descend l'organe de perçage à l'intérieur de la cavité jusque dans une position enfoncée dans laquelle l'opercule est percé,
- on remonte l'organe de perçage depuis sa position enfoncée jusqu'à une position de sortie située au-dessus de la cavité.

Selon certains modes de mise en oeuvre,
- on place le réceptacle dans une position d'entrée en face de l'organe de perçage,
- on déplace le réceptacle vers l'organe de perçage de sorte que l'organe de perçage pénètre dans la cavité, jusqu'à une position enfoncée dans laquelle l'opercule est percé,
- on éloigne le réceptacle de l'organe de perçage en l'amenant jusqu'à une position de sortie située en face dudit organe de perçage.

Dans tous les cas on pourra, dans une étape suivante, éloigner le réceptacle de l'organe de perçage ou inversement.

Selon certains modes de mise en oeuvre, on maintient l'organe de perçage et le réceptacle dans la position enfoncée pendant une durée prédéterminée.

Selon certains modes de mise en oeuvre, l'introduction de l'organe de perçage à l'intérieur de la cavité et son extraction de la cavité, autrement dit la descente et la remontée de l'organe de perçage ou l'élévation et l'abaissement du récipient, sont réalisées dans un mouvement de va-et-vient continu. Autrement dit, l'organe de perçage ou le récipient effectue un mouvement d'aller-retour continu au cours duquel l'organe de perçage n'est pas immobilisé en position enfoncée dans la cavité du réceptacle.

Selon certains modes de mise en oeuvre, après le perçage de l'opercule, l'organe de perçage et le réceptacle sont immobilisés dans la position de sortie pendant une durée prédéterminée.

Selon certains modes de mise en oeuvre, l'introduction de l'organe de perçage (autrement dit la descente de l'organe de perçage ou l'élévation du réceptacle depuis sa position d'entrée jusqu'à sa position enfoncée) est réalisée avec une première vitesse prédéterminée, et l'extraction de l'organe de perçage (autrement dit la remontée de l'organe de perçage ou l'abaissement du réceptacle depuis sa position enfoncée jusqu'à sa position de sortie) est réalisée avec une deuxième vitesse prédéterminée pouvant être égale, inférieure ou supérieure à la première.

Plusieurs modes ou exemples de réalisation sont décrits dans le présent exposé. Toutefois, sauf précision contraire, les caractéristiques décrites en relation avec un mode ou exemple quelconque peuvent être appliquées à un autre mode ou exemple de réalisation.

D'autres caractéristiques et avantages de l'invention ressortiront à la lecture de la description suivante d'exemples de réalisation de l'invention donnés à titre illustratif et non limitatif. Cette description fait référence aux feuilles de dessins annexés sur lesquelles :
- la figure 1 est une représentation schématique d'un automate d'analyses médicales adapté pour le traitement d'échantillons de prélèvements humains, et comprenant un robot poly-articulé muni du système de perçage selon un premier mode de réalisation de l'invention ;
- la figure 2 est une vue de face d'un réceptacle de type carte gel destiné à être utilisé avec l'automate de la figure 1 ;
- la figure 3 est une vue de détail du système de perçage selon le premier mode de réalisation de l'invention ;
- la figure 4A est une vue en coupe du système de perçage selon le premier mode de réalisation de l'invention, montrant l'organe de perçage en position entièrement rétractée ;
- la figure 4B est une vue en coupe du début du perçage de l'opercule de la carte gel par le système de perçage selon le premier mode de réalisation selon l'invention ;
- la figure 4C est une vue en coupe du système de perçage selon le premier mode de réalisation de l'invention avec l'organe de perçage en position enfoncée ;
- la figure 5 est une vue de détail d'une variante du dispositif ionisant selon le premier mode de réalisation de l'invention;
- la figure 6 est une vue de détail du système de perçage selon un deuxième mode de réalisation de l'invention;
- la figure 7A est une vue en coupe du système de perçage selon le deuxième mode de réalisation de l'invention, montrant le réceptacle de type carte gel en position d'entrée en dessous de l'organe de perçage;
- la figure 7B est une vue en coupe du début du perçage de l'opercule de la carte gel par le système de perçage selon le deuxième mode de réalisation; et
- la figure 7C est une vue en coupe du système de perçage selon le deuxième mode de réalisation de l'invention avec le réceptacle en position enfoncée.

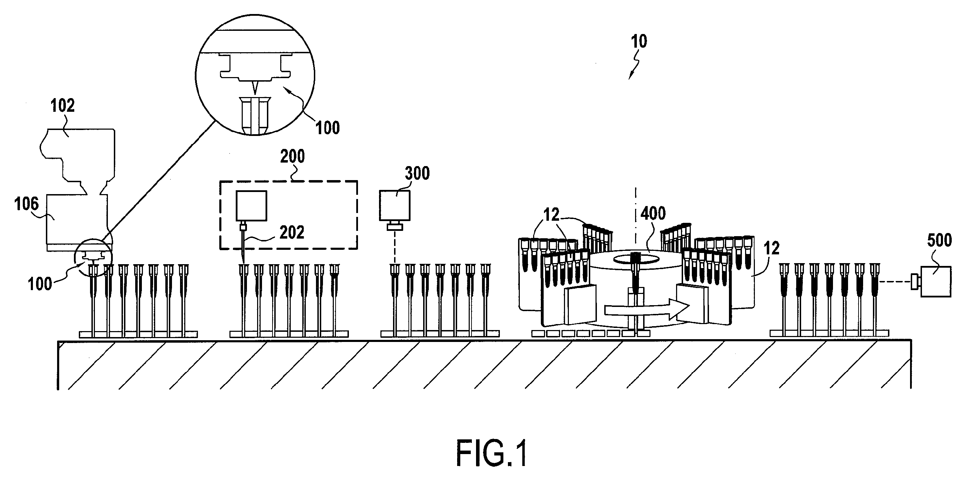

Sur la figure 1, on a représenté de manière schématique un exemple d'automate d'analyses médicales 10.

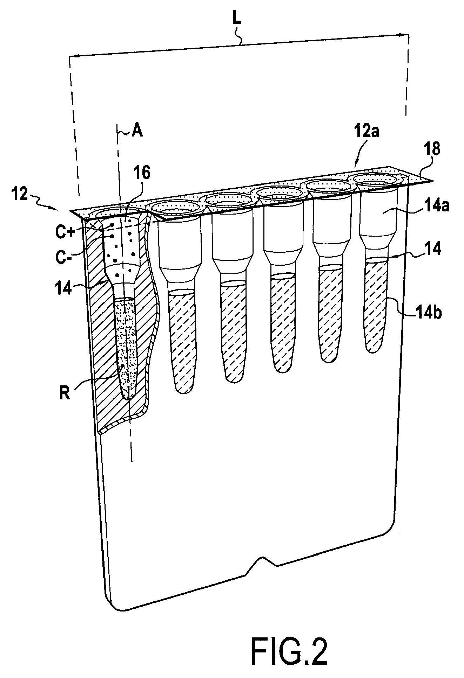

Cet automate d'analyses médicales 10 manipule des cartes gel. Comme illustré sur la figure 2, une carte gel 12 est munie de plusieurs puits ou cavités 14, notamment six puits, débouchant dans une paroi supérieure 12a de ladite carte gel. Ces puits 14 présentent des ouvertures 16 formées dans la paroi supérieure 12a de la carte gel 12, lesdites ouvertures 16 étant initialement obturées par un opercule 18 s'étendant selon une direction longitudinale L de la carte gel 12. Dans l'exemple, l'opercule 18 est une bande mince scellée à la paroi supérieure de la carte gel 12.

Chaque puits 14 de ladite carte gel 12 est rempli d'un réactif R, ledit réactif R pouvant être différent d'un puits à l'autre de la carte gel 12. En outre, chaque puits 14 est formé d'une cavité supérieure 14a de forme sensiblement cylindrique reliée à une cavité inférieure 14b de forme également sensiblement cylindrique par l'intermédiaire d'une cavité intermédiaire tronconique. La cavité supérieure 14a présente un diamètre sensiblement supérieur à celui de la cavité inférieure 14b, les cavités inférieure et supérieure étant coaxiales d'axe commun A. Le niveau de réactif est situé légèrement en dessous de l'extrémité supérieure de la cavité inférieure 14b, tandis que la cavité supérieure 14a initialement vide, débouche dans la paroi supérieure 12a de la carte gel 12.

En se référant de nouveau à la figure 1, on constate que l'automate 10 comporte un système de perçage 100 selon un premier mode de réalisation de l'invention monté sur un robot poly-articulé 102 au niveau de l'extrémité distale (ou encore appelé organe terminal) 106 de son bras, un dispositif de remplissage des cartes gel 200, une station de contrôle 300 pour vérifier le positionnement du liquide déversé dans les puits 14 par le dispositif de remplissage 200, une centrifugeuse 400, et des moyens 500 pour analyser les réactions chimiques susceptibles de se dérouler dans les puits 14 de la carte gel 12, notamment une station de vision.

Il se trouve que les cartes gel 12 sont réalisées en matière plastique et ont tendance à porter des charges électrostatiques C⁺ et C⁻ (voir figure 2).

Avant d'introduire les échantillons à analyser dans un puits 14 choisi pour réaliser l'analyse et pour les raisons déjà évoquées précédemment, la portion d'opercule 18 située au-dessus du puits 14 doit être perforée et le puits 14 doit être ionisé de manière à supprimer les charges électrostatiques.

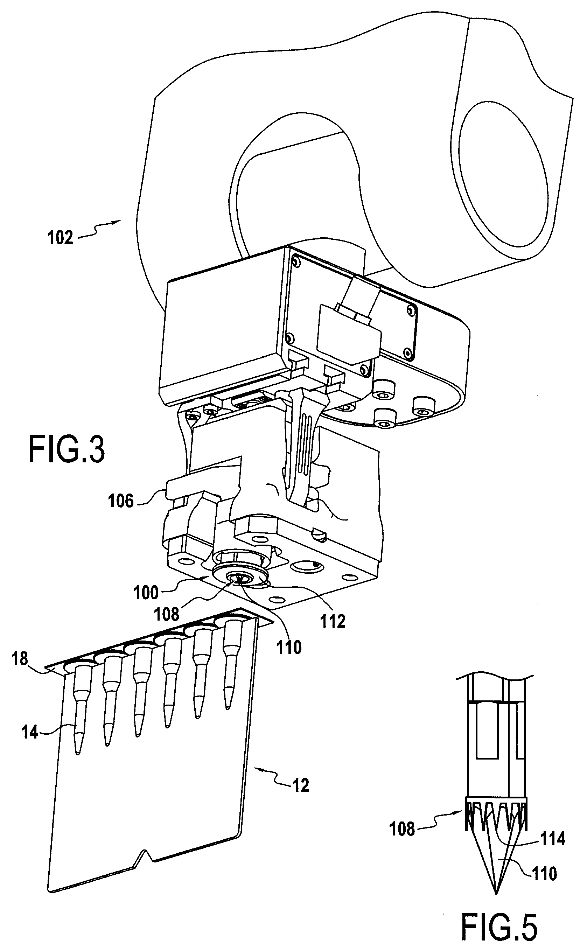

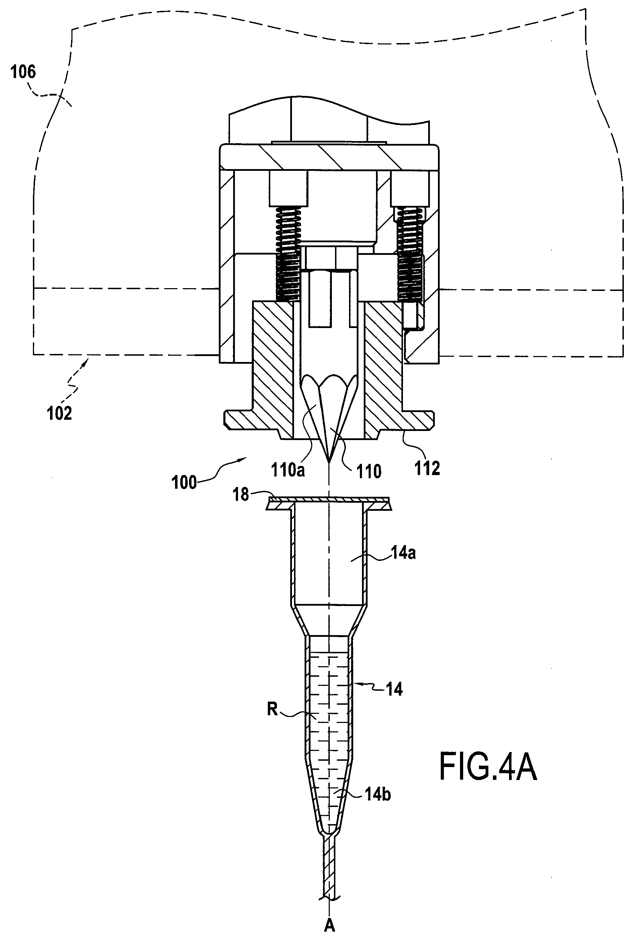

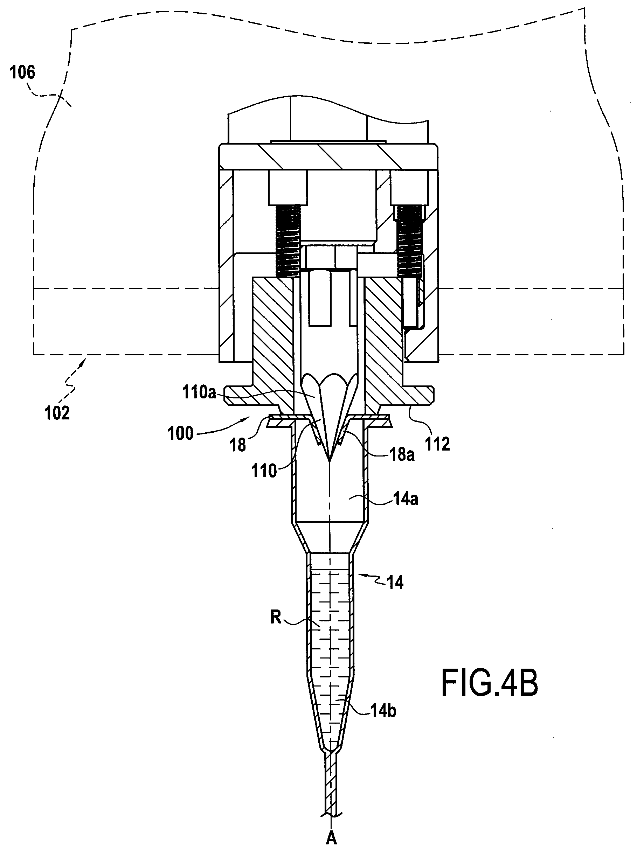

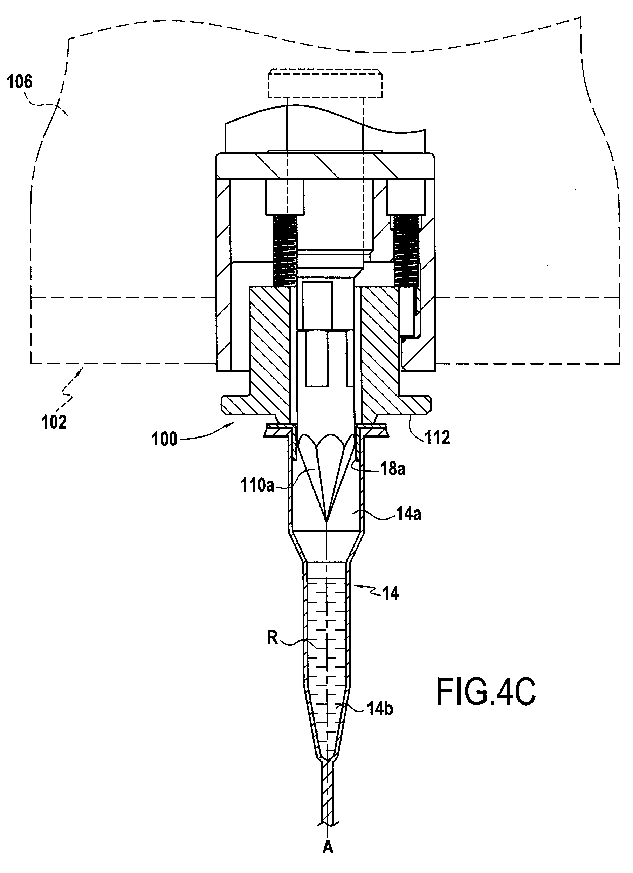

Avec le dispositif de perçage 100 selon le premier mode de réalisation de l'invention qui sera décrit plus en détail à l'aide des figures 3, 4A, 4B et 4C, les opérations de perçage et d'ionisation sont réalisées à l'aide d'un seul et même organe, généralement de manière concomitante. Ce mode de mise en oeuvre n'est cependant pas limitatif, et l'opération d'ionisation peut aussi, comme alternative ou en complément, être réalisée à l'issue de l'opération de perçage.

Comme illustré sur la figure 3, le système de perçage 100 comprend un dispositif ionisant 108 muni d'une pointe 110 formant organe de perçage et fixée de manière détachable à un manchon cylindrique 112, cette disposition permettant de nettoyer ladite pointe 110 régulièrement.

Selon l'invention, la pointe de perçage 110 réalise à la fois l'opération de perçage de la portion d'opercule 18 située au-dessus du puits 14 et l'opération d'ionisation dudit puits 14.

Afin d'ioniser ledit puits 14, la pointe de perçage 110 est adaptée à être portée à un potentiel électrique engendrant un effet corona qui élimine les charges électrostatiques portées par la carte gel. En l'espèce, la pointe de perçage 110 génère un champ électrique E au niveau des puits de la carte gel. Pour ce faire, on peut choisir, par exemple, pour la pointe de perçage 110, une alimentation délivrant une onde quasi sinusoïdale, de fréquence 250Hz, de différence de potentiel minimale 4,2kV et de sortance inférieure à 3,5mA.

L'absence d'arc électrique permet par ailleurs au dispositif ionisant 108 d'être en contact avec la carte gel 12.

Dans l'exemple illustré, la pointe de perçage 110 a un diamètre extérieur sensiblement égal au diamètre intérieur de la cavité supérieure 14a du puits de la carte gel 12. Cet exemple n'est cependant pas limitatif et le diamètre extérieur de la pointe de perçage 110 peut être sensiblement inférieur au diamètre intérieur de la cavité supérieure 14a du puits 14 de la carte gel.

En outre, la pointe de perçage 110 peut comprendre des facettes biseautées 110a. Il est possible d'ajuster le nombre de facettes biseautées 110a de la pointe de perçage 110 et l'inclinaison de ces facettes biseautées 110a par rapport à l'axe principal de la pointe de perçage 110, en fonction de la nature du matériau formant l'opercule 18.

Selon une variante de l'invention, des pointes ionisantes non perçantes 114 peuvent être positionnées en anneau autour de la pointe de perçage 110 comme cela est représenté sur la figure 5, cela permettant de renforcer l'efficacité de l'ionisation du puits 14 de la carte gel 12.

Le procédé de perçage de l'opercule 18 d'une carte gel 12 selon l'invention va à présent être décrit en référence aux figures 4A à 4C.

Lors d'une première étape, la pointe de perçage 110 est tout d'abord alignée avec l'axe A du puits 14 de la carte gel 12 comme illustré sur la figure 4A. A cet instant, la pointe de perçage 110 est placée dans une position dite d'entrée au-dessus de l'opercule 18.

Dans une seconde étape du procédé, comme illustré sur les figures 4B et 4C, la pointe de perçage 110 est descendue à l'intérieur de la cavité supérieure 14a du puits 14 avec un mouvement de translation verticale jusque dans une position enfoncée dans laquelle l'opercule 18 est complètement percé. On note que le manchon 112 vient se positionner en appui de part et d'autre du puits 14 sur la paroi supérieure 12a.

Comme indiqué précédemment, la pointe de perçage 110 a un diamètre extérieur sensiblement égal au diamètre intérieur de la cavité supérieure 14a du puits de la carte gel 12. Ainsi, comme illustré sur les figures 4B et 4C, lors du perçage de l'opercule du puits 14, la pointe de perçage 110 glisse le long des parois de la cavité supérieure 14a du puits, rabattant la portion d'opercule percé 18a le long des parois de ladite cavité supérieure 14a. Dans ce cas, la pointe de perçage 110 étant en contact avec l'opercule 18, l'environnement proche de la pointe de perçage 110 bénéficie de l'effet résiduel de l'ionisation.

La pointe de perçage 110 vient à la fois perforer la portion d'opercule 18 de la carte gel 12 situé au-dessus du puits 14 et ioniser le puits 14.

Dans une troisième étape, la pointe de perçage 110 est ensuite remontée depuis sa position enfoncée jusqu'à sa position de sortie située au-dessus du puits 14.

De façon préférentielle, la pointe de perçage 110 est portée à un potentiel électrique engendrant un effet corona permettant d'éliminer les charges électrostatiques portées par la carte gel en continu, tout au long de l'opération de perçage (i.e. au cours de la seconde et de la troisième étape).

Enfin, dans une quatrième étape, la pointe de perçage 110 est éloignée de la carte gel 12, éventuellement pour réitérer les étapes énoncées précédemment sur un autre puits de la carte gel 12.

Ainsi le procédé de perçage selon l'invention permet à la fois de percer l'opercule 18 d'un puits 14 de la carte gel 12 et d'ioniser ce puits 14. Cela est particulièrement intéressant pour des cartes gel 12 utilisées partiellement au cours des analyses. Dans certains cas, en effet, certains puits sont utilisés pour une première analyse et les autres puits sont utilisés à l'occasion d'une deuxième analyse. Pour chaque analyse, il est cependant nécessaire de garantir la qualité du réactif R présent dans les puits 14 de la carte gel 12. Il est donc recommandé que les puits 14 soient ouverts au dernier moment juste avant leur remplissage.

Selon un mode de mise en oeuvre du procédé de perçage selon l'invention, la pointe de perçage 110 peut être immobilisée dans sa position enfoncée pendant une durée prédéterminée, une seconde par exemple.

Selon un autre mode de mise en oeuvre du procédé de perçage, la descente et la remontée de la pointe de perçage 110 peut aussi s'effectuer selon un mouvement de va-et-vient continu. Dans ce cas, la pointe n'est pas immobilisée en position enfoncée.

De manière avantageuse, après le perçage de la portion d'opercule située au-dessus du puits choisi 14, la pointe de perçage 110 peut être immobilisée dans sa position de sortie pendant une durée prédéterminée comme par exemple une seconde. Ce mode de mise en oeuvre donne de bons résultats en ce qui concerne la formation d'une poche d'air entre la dose de liquide dispensée et le réactif.

La formation de la poche d'air est encore favorisée lorsque la descente de la pointe de perçage 110 depuis sa position d'entrée jusqu'à sa position enfoncée est réalisée avec une première vitesse déterminée, et sa remontée jusqu'à sa position de sortie avec une deuxième vitesse prédéterminée inférieure à la première. Dans ce cas, par exemple, la remontée de la pointe de perçage 110 depuis sa position enfoncée jusqu'à sa position de sortie peut se faire en une seconde, l'opération de perçage ayant été réalisée dans un temps inférieur à une seconde.

Comme illustré sur la figure 1, après l'opération de perçage et d'ionisation, la carte gel 12 est généralement amenée vers les moyens de remplissage 200. Ces moyens de remplissage 200 comprennent au moins une pipette 202 qui est insérée dans la cavité supérieure 14a du puits 14 par le trou formé dans l'opercule 18, pour y déverser une dose de liquide. De façon préférentielle, comme déjà indiqué précédemment, on fait en sorte de créer une poche d'air entre le réactif et la dose déversée.

Ensuite, à l'issue de l'étape de remplissage, la carte gel 12 est amenée vers la station de contrôle 300 afin de vérifier la présence des poches d'air. Puis, la carte gel 12 est incubée et centrifugée grâce à la centrifugeuse 400. Enfin, le résultat des réactions chimiques est analysé à l'aide des moyens d'analyse de réactions chimiques 500.

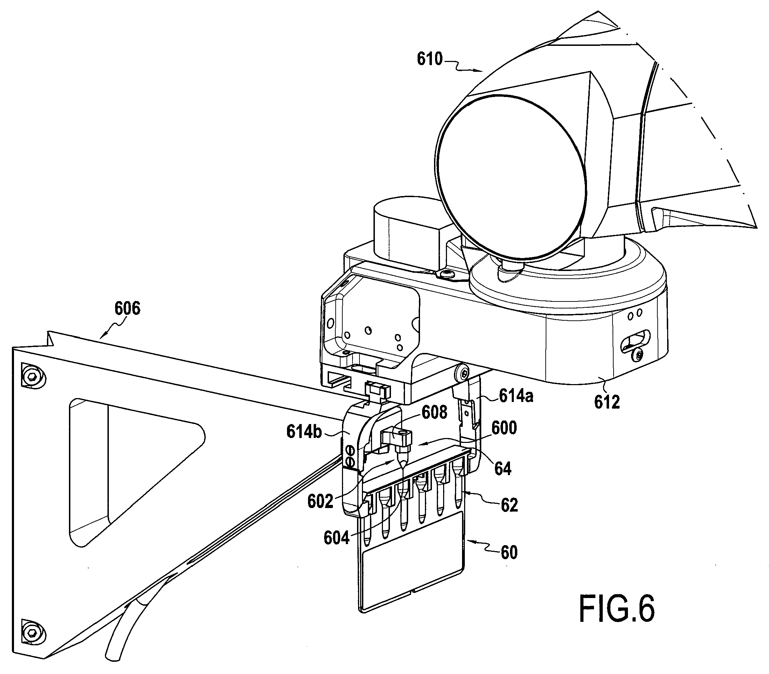

Un système de perçage suivant un deuxième mode de réalisation de l'invention est décrit en référence aux figures 6 à 7C. Le deuxième mode de réalisation de l'invention diffère principalement du premier mode de réalisation en ce qu'un système de perçage 600 est fixe dans l'automate d'analyse médicale 10 et en ce qu'une carte gel 60, manipulée par l'automate d'analyse médicale 10, est mobile par rapport au système de perçage 600.

La carte gel 60 représentée sur la figure 6 est sensiblement identique à la carte gel du premier mode réalisation et ne sera donc pas décrite en détail ci-après. Sauf indication contraire, toutes les caractéristiques de la carte gel décrite précédemment restent valables pour ce deuxième mode de réalisation.

De même qu'avec le système de perçage 100 selon le premier mode de réalisation, les opérations de perçage et d'ionisation des puits 62 de la carte gel 60 sont ici réalisées à l'aide d'un seul et même organe.

Sur la figure 6, on a représenté le système de perçage 600 qui comprend un dispositif ionisant 602 muni d'une pointe 604 formant organe de perçage. Dans l'exemple illustré, la pointe de perçage 604 est fixée à un corps d'attache 608 lui-même fixé de manière détachable à un support 606, ici une équerre, solidaire du châssis de l'automate 10. Le montage du système de perçage 600 est ainsi simple et s'intègre facilement dans l'automate d'analyse médicale 10. Le montage détachable de la pointe de perçage 604 permet en outre son nettoyage régulier.

Comme dans le premier mode de réalisation, la pointe de perçage 604 est adaptée à être portée à un potentiel électrique engendrant en permanence un effet corona.

La carte gel 60 peut être déplacée par rapport au système de perçage au moyen d'un robot poly-articulé 610 de l'automate 10. Comme illustré sur la figure 6, la carte gel 60 est saisie à ses deux extrémités par deux mâchoires 614a, 614b, sensiblement en forme de L formant en partie l'organe terminal 612 du robot poly-articulé 610.

Le procédé de perçage de l'opercule 64 d'une carte gel 60 au moyen du système de perçage précité ne diffère du procédé de perçage décrit en liaison avec les figures 4A à 4C qu'en ce que le réceptacle est cette fois mobile tandis que l'organe de perçage est fixe.

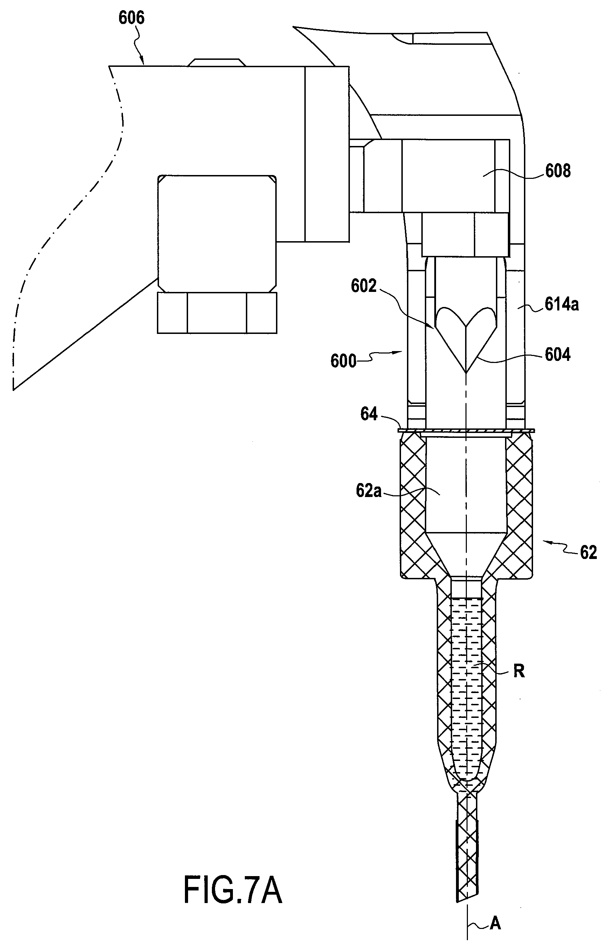

Ainsi, dans une première étape illustrée sur la figure 7A, la carte gel 60 est déplacée avec le robot poly-articulé 610 jusqu'à une position d'entrée dans laquelle elle est placée en-dessous de la pointe de perçage 604, l'axe A d'un puits 62 de la carte étant aligné avec la pointe de perçage 604.

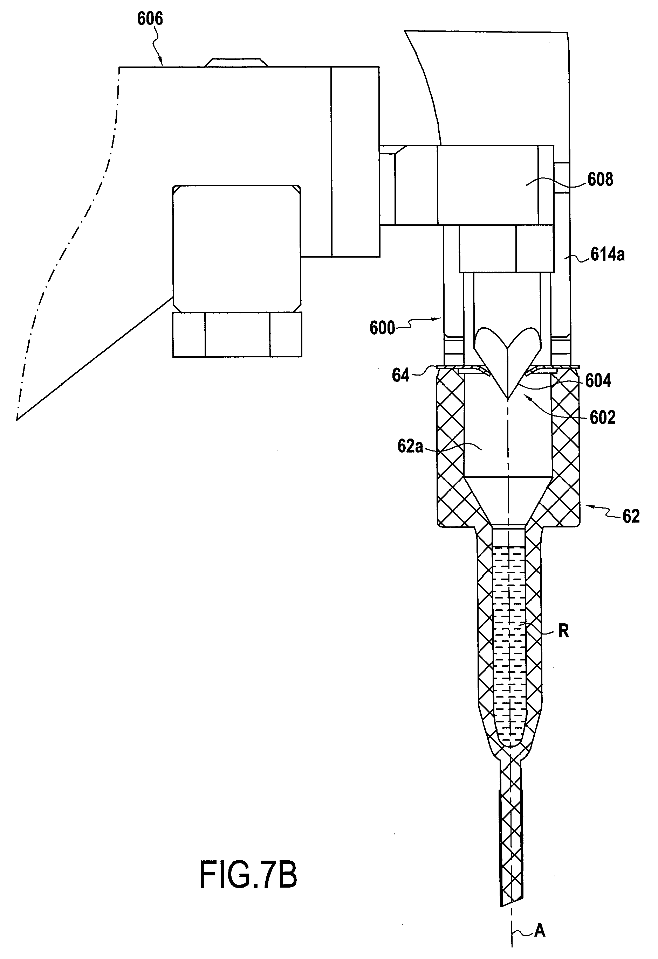

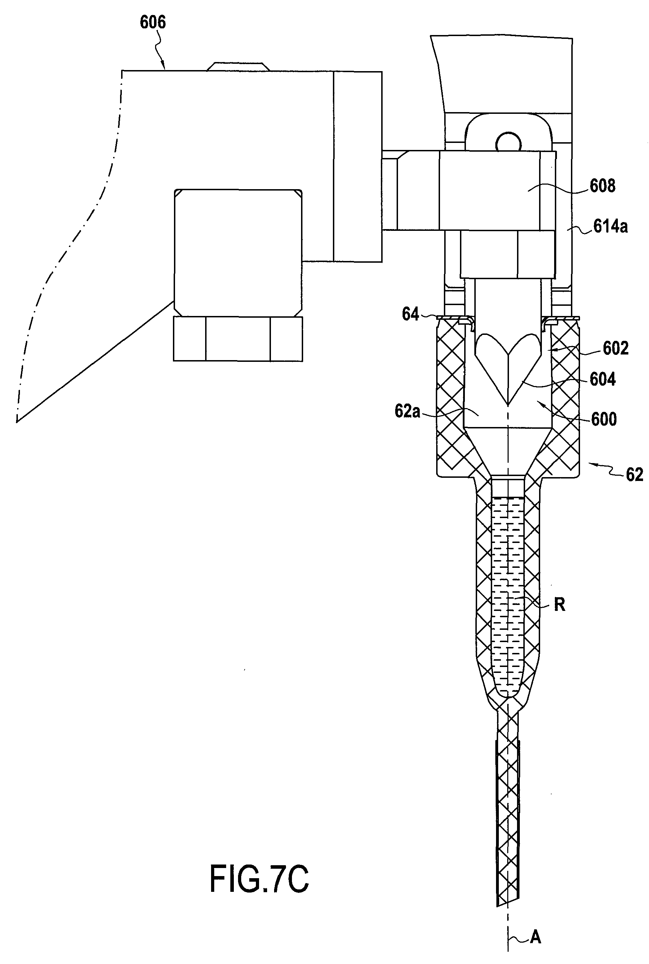

Dans une seconde étape du procédé, illustrée sur les figures 7B et 7C, la carte gel 60 est déplacée en direction de la pointe de perçage 604 avec un mouvement de translation, ici vertical, jusque dans une position enfoncée dans laquelle l'opercule 64 est percé.

A noter que dans l'exemple, le diamètre de la pointe de perçage 604 est sensiblement inférieur au diamètre de la cavité supérieure 62a de la carte gel 60. Dans d'autres exemples, le diamètre de la pointe de perçage 604 pourrait être encore plus petit ou sensiblement égal au diamètre de la cavité supérieure 62a de la carte gel 60.

La carte gel 60 est finalement abaissée depuis sa position enfoncée jusqu'à sa position de sortie située au-dessous de la pointe de perçage 604.

Généralement, l'opération de perçage et d'ionisation du puits 62 s'effectuent de façon concomitante et, plus particulièrement, l'ionisation est réalisée tout au long de l'opération de perçage. Mais ce mode de mise en oeuvre n'est pas limitatif et l'ionisation pourra par exemple être réalisée pendant et après l'opération de perçage ou seulement après l'opération de perçage.

Les différents séquençages de l'opération de perçage, décrit en liaison avec le premier mode de réalisation, sont applicables à ce second mode de également.

Ainsi, il peut être prévu que la carte gel 60 soit immobilisée dans sa position enfoncée et/ou dans sa position de sortie pendant une durée prédéterminée, ou au contraire que son mouvement à l'intérieur de la cavité supérieure 62a s'effectue selon un mouvement de va-et-vient continu, ou encore que la vitesse avec laquelle elle est enfilée sur la pointe de perçage 604 soit plus importante que la vitesse avec laquelle elle en est retirée.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Système de perçage (100, 600) d'au moins un opercule (18, 64) fermant au moins une cavité (14, 62) d'un réceptacle (12, 60), ledit système comportant un organe de perçage (110, 604) configuré pour perforer l'opercule (18, 64) et un dispositif ionisant (108, 602) pour supprimer les charges électrostatiques susceptibles d'être portées par ladite cavité (14, 62), **caractérisé en ce que** ledit dispositif ionisant (108, 602) comprend l'organe de perçage (110, 604), ledit organe de perçage étant adapté pour présenter des propriétés ionisantes.

2. Système de perçage selon la revendication 1, dans lequel l'organe de perçage (110, 604) comprend une pointe de perçage destinée à pénétrer dans la cavité (14, 62) du réceptacle (12, 60) en traversant l'opercule (18, 64).

3. Système de perçage selon la revendication 1 ou 2 dans lequel le réceptacle (12, 60) est une carte gel qui comporte une pluralité de puits fermés par un opercule (18, 64), chacun des puits contenant un ou plusieurs réactifs (R), et dans lequel la cavité (14, 62) est un puits de ladite carte gel.

4. Système de perçage selon l'une quelconque des revendications 1 à 3, dans lequel l'organe de perçage (110, 604) est adapté à être porté à un potentiel électrique engendrant un effet corona.

5. Procédé de perçage d'au moins un opercule (18, 64) fermant au moins une cavité (14, 62) d'un réceptacle (12, 60), comprenant le perçage de l'opercule (18, 64) afin d'ouvrir ladite cavité (14, 62) et la suppression des charges électrostatiques susceptibles d'être portées par ladite cavité (14, 62), dans lequel le perçage de l'opercule (18, 64) et la suppression des charges électrostatiques sont réalisés à l'aide d'un même organe de perçage (110, 604) muni d'un dispositif ionisant (108, 602) et donc adapté pour présenter des propriétés ionisantes.

6. Procédé de perçage selon la revendication 5, dans lequel le perçage de l'opercule (18, 64) et la suppression des charges électrostatiques sont réalisés de façon concomitante.

7. Procédé de perçage selon la revendication 5 ou 6, comprenant au moins la succession d'étapes suivantes :
- on place l'organe de perçage (110, 604) et le réceptacle (12, 60) dans une position d'entrée,
- on introduit l'organe de perçage (110, 604) à l'intérieur de la cavité (14, 62) jusque dans une position enfoncée dans laquelle l'opercule (18, 64) est percé, et
- on extrait l'organe de perçage (110, 604) de la cavité (14, 62) et on place l'organe de perçage (110, 604) et le réceptacle (12, 60) dans une position de sortie.

8. Procédé de perçage selon la revendication 7, dans lequel l'organe de perçage (110, 604) présente des propriétés ionisantes de façon continue ou sensiblement continue entre le début de l'introduction de l'organe de perçage (110, 604) à l'intérieur de la cavité et la fin du retrait de l'organe de perçage (110, 604) hors de la cavité (14, 62).

9. Procédé de perçage selon l'une quelconque des revendications 5 à 8, comprenant au moins la succession d'étapes suivantes :
- on place l'organe de perçage (110) dans une position d'entrée au-dessus de l'opercule (18),
- on descend l'organe de perçage (110) à l'intérieur de la cavité (14) jusque dans une position enfoncée dans laquelle l'opercule (18) est percé,
- on remonte l'organe de perçage (110) depuis sa position enfoncée jusqu'à une position de sortie située au-dessus de la cavité (14).

10. Procédé de perçage selon l'une quelconque des revendications 5 à 8, comprenant au moins la succession d'étapes suivantes :
- on place le réceptacle (60) dans une position d'entrée en face de l'organe de perçage (604),
- on déplace le réceptacle (60) vers l'organe de perçage (604) de sorte que l'organe de perçage (604) pénètre dans la cavité (62), jusqu'à une position enfoncée dans laquelle l'opercule (64) est percé,
- on éloigne le réceptacle (60) de l'organe de perçage (604) en l'amenant jusqu'à une position de sortie située en face dudit organe de perçage.

11. Procédé de perçage selon l'une quelconque des revendications 7 à 10, dans lequel on maintient l'organe de perçage (110, 604) et le réceptacle (12, 60) dans la position enfoncée pendant une durée prédéterminée.

12. Procédé de perçage selon l'une quelconque des revendications 7 à 10, dans lequel l'introduction de l'organe de perçage (110, 604) à l'intérieur de la cavité (14, 62) et son extraction de la cavité (14, 62) sont réalisées dans un mouvement de va-et-vient continu.

13. Procédé de perçage selon l'une quelconque des revendications 7 à 12, dans lequel, après le perçage de l'opercule (18, 64), l'organe de perçage (110, 604) et le réceptacle (12, 60) sont immobilisés dans la position de sortie pendant une durée prédéterminée.

14. Procédé de perçage selon l'une quelconque des revendications 7 à 13, dans lequel l'introduction de l'organe de perçage (110, 604) est réalisée avec une première vitesse prédéterminée, et l'extraction de l'organe de perçage (110, 604) est réalisée avec une deuxième vitesse prédéterminée inférieure, ou égale, ou supérieure à la première.

## Patentansprüche

1. System zum Durchbohren (100, 600) mindestens eines Deckels (18, 64), der mindestens einen Hohlraum (14, 62) eines Behälters (12, 60) verschließt, wobei das System ein Element zum Durchbohren (110, 604), das dazu vorgesehen ist, den Deckel (18, 64) zu durchbohren, und eine lonisiervorrichtung (108, 602) umfasst, um die elektrostatischen Ladungen, die von dem Hohlraum (14, 62) getragen werden können, zu unterdrücken, **dadurch gekennzeichnet, dass** die lonisiervorrichtung (108, 602) das Durchbohrungselement (110, 604) umfasst, wobei das Durchbohrungselement dazu vorgesehen ist, ionisierende Eigenschaften aufzuweisen.

2. System zum Durchbohren nach Anspruch 1, bei dem das Durchbohrungselement (110, 604) eine Bohrspitze umfasst, die dazu vorgesehen ist, in den Hohlraum (14, 62) des Behälters (12, 60) einzudringen, wobei sie durch den Deckel (18, 64) hindurchgeht.

3. System zum Durchbohren nach Anspruch 1 oder 2, bei dem der Behälter (12, 60), eine Gelkarte ist, die eine Vielzahl von durch einen Deckel (18, 64) verschlossenen Vertiefungen aufweist, wobei jede der Vertiefungen ein oder mehrere Reagenzien (R) enthält, und wobei der Hohlraum (14, 62) eine Vertiefung der Gelkarte ist.

4. System zum Durchbohren nach einem der Ansprüche 1 bis 3, bei dem das Durchbohrungselement (110, 604) geeignet ist, auf ein elektrischen Potenzial gebracht zu werden, das eine Corona-Entladung hervorruft.

5. Verfahren zum Durchbohren mindestens eines Deckels (18, 64), der mindestens einen Hohlraum (14, 62) eines Behälters (12, 60) verschließt, umfassend das Durchbohren des Deckels (18, 64), um den Hohlraum (14, 62) zu öffnen, und die Unterdrückung der elektrostatischen Ladungen, die von dem Hohlraum (14, 62) getragen werden können, bei dem das Durchbohren des Deckels (18, 64) und die Unterdrückung der elektrostatischen Ladungen mit Hilfe eines Durchbohrungselements (110, 604) erfolgen, das mit einer lonisiervorrichtung (108, 602) versehen und somit geeignet ist, ionisierende Eigenschaften aufzuweisen.

6. Verfahren zum Durchbohren nach Anspruch 5, bei dem das Durchbohren des Deckels (18, 64) und die Unterdrückung der elektrostatischen Ladungen begleitend erfolgen.

7. Verfahren zum Durchbohren nach Anspruch 5 oder 6, umfassend mindestens die Aufeinanderfolge der folgenden Schritte:
- Anordnen des Durchbohrungselements (110, 604) und des Behälters (12, 60) in einer Eintrittsposition,
- Einführen des Durchbohrungselements (110, 604) in das Innere des Hohlraums (14, 62) bis in eine versenkte Position, in der der Deckel (18, 64) durchbohrt ist, und
- Herausziehen des Durchbohrungselements (110, 604) aus dem Hohlraum (14, 62) und Anordnen des Durchbohrungselements (110, 604) und des Behälters (12, 60) in einer Ausgangsposition.

8. Verfahren zum Durchbohren nach Anspruch 7, bei dem das Durchbohrungselement (110, 604) ionisierende Eigenschaften auf kontinuierliche oder im Wesentlichen kontinuierliche Weise zwischen dem Beginn der Einführung des Durchbohrungselements (110, 604) in das Innere des Hohlraums und dem Ende des Herausziehens des Durchbohrungselements (110, 604) aus dem Hohlraum (14, 62) aufweist.

9. Verfahren zum Durchbohren nach einem der Ansprüche 5 bis 8, umfassend mindestens die Aufeinanderfolge der folgenden Schritte:
- Anordnen des Durchbohrungselements (110) in einer Eintrittsposition über dem Deckel (18),
- Absenken des Durchbohrungselements (110) in das Innere des Hohlraums (14) bis in eine versenkte Position, in der der Deckel (18) durchbohrt ist,
- Herausziehen des Durchbohrungselements (110) von seiner versenkten Position bis in eine Austrittsposition, die sich über dem Hohlraum (14) befindet.

10. Verfahren zum Durchbohren nach einem der Ansprüche 5 bis 8, umfassend mindestens die Aufeinanderfolge der folgenden Schritte:
- Anordnen des Behälters (60) in einer Eintrittsposition gegenüber dem Durchbohrungselement (604),
- Bewegen des Behälters (60) zu dem Durchbohrungselement (604), so dass das Durchbohrungselement (604) in den Hohlraum (62) bis in eine versenkte Position eindringt, in der der Deckel (64) durchbohrt ist,
- Entfernen des Behälters (60) von dem Durchbohrungselement (604), wobei es in eine Austrittsposition gebracht wird, die sich gegenüber dem Durchbohrungselement befindet.

11. Verfahren zum Durchbohren nach einem der Ansprüche 7 bis 10, bei dem das Durchbohrungselement (110, 604) und der Behälter (12, 60) in der versenkten Position während einer vorbestimmten Dauer gehalten wird.

12. Verfahren zum Durchbohren nach einem der Ansprüche 7 bis 10, bei dem die Einführung des Durchbohrungselements (110, 604) in das Innere des Hohlraums (14, 62) und sein Herausziehen aus dem Hohlraum (14, 62) in einer kontinuierlichen Hin- und Herbewegung erfolgen.

13. Verfahren zum Durchbohren nach einem der Ansprüche 7 bis 12, bei dem nach dem Durchbohren des Deckels (18, 64) das Durchbohrungselement (110, 604) und der Behälter (12, 60) in der Austrittsposition während einer vorbestimmten Dauer festgestellt werden.

14. Verfahren zum Durchbohren nach einem der Ansprüche 7 bis 13, bei dem die Einführung des Durchbohrungselements (110, 604) mit einer ersten vorbestimmten Geschwindigkeit erfolgt, und das Herausziehen des Durchbohrungselements (110, 604) mit einer zweiten vorbestimmten Geschwindigkeit erfolgt, die kleiner oder gleich oder größer als die erste ist.

## Claims

1. A piercing system (100, 600) for piercing at least one sealing membrane (18, 64) closing off at least one cavity (14, 62) of a receptacle (12, 60), said system including a piercing member (110, 604) configured to puncture the sealing membrane (18, 64) and an ionizing device (108, 602) for removing the electrostatic charges that might be carried by said cavity (14, 62), said ionizing device (108, 602) comprising the piercing member (110, 604) that is adapted to present ionizing properties.

2. A piercing system according to claim 1, wherein the piercing member (110, 604) comprises a piercing spike designed to penetrate into the cavity (14, 62) of the receptacle (12, 60) by passing through the sealing membrane (18, 64).

3. A piercing system according to claim 1 or claim 2, wherein the receptacle (12, 60) is a gel card that includes a plurality of wells closed off by a sealing membrane (18, 64), each of the wells containing one or more reagents (R), and wherein the cavity (14, 62) is a well in said gel card.

4. A piercing system according to any one of claims 1 to 3, in which the piercing member (110, 604) is adapted to be brought to an electric potential generating corona effect.

5. A piercing method for piercing at least one sealing membrane (18, 64) closing off at least one cavity (14, 62) of a receptacle (12, 60), said method comprising piercing the sealing membrane (18, 64) in order to open up said cavity (14, 62), and removing the electrostatic charges that might be carried by said cavity (14, 62), wherein the piercing of the sealing membrane (18, 64) and the removal of the electrostatic charges are performed by means of a single common member, namely a piercing member (110, 604) adapted to present ionizing properties.

6. A piercing method according to claim 5, wherein the piercing of the sealing membrane (18, 64) and the removal of the electrostatic charges are performed together.

7. A piercing method according to claim 5 or claim 6, comprising at least the following steps in succession:
• placing the piercing member (110, 604) and the receptacle (12, 60) in an entry position;
• inserting the piercing member (110, 604) into the cavity (14, 62) to a pushed-in position in which the sealing membrane (18, 64) is pierced; and
• extracting the piercing member (110, 604) from the cavity (14, 62) and placing the piercing member (110, 604) and the receptacle (12, 60) in an exit position.

8. A piercing method according to claim 7, wherein the piercing member (110, 604) presents ionizing properties continuously or substantially continuously from the start of insertion of the piercing member (110, 604) into the cavity to the end of withdrawal of the piercing member (110, 604) from the cavity (14, 62).

9. A piercing method according to any one of claims 5 to 8, comprising at least the following steps in succession:
• placing the piercing member (110) in an entry position above the sealing membrane (18);
• lowering the piercing member (110) into the cavity (14) to a pushed-in position in which the sealing membrane (18) is pierced; and
• raising the piercing member (110) back up from its pushed-in position to an exit position situated above the cavity (14).

10. A piercing method according to any one of claims 5 to 8, comprising at least the following steps in succession:
• placing the receptacle (60) in an entry position facing the piercing member (604);
• moving the receptacle (60) towards the piercing member (604) so that the piercing member (604) penetrates into the cavity (62) to a pushed-in position in which the sealing membrane (64) is pierced; and
• moving the receptacle (60) away from the piercing member (604) by bringing it to an exit position situated facing said piercing member.

11. A piercing method according to any one of claims 7 to 10, wherein the piercing member (110, 604) and the receptacle (12, 60) are maintained in the pushed-in position for a predetermined period.

12. A piercing method according to any one of claims 7 to 10, wherein inserting the piercing member (110, 604) into the cavity (14, 62) and extracting it from the cavity (14, 62) are performed in a continuous back-and-forth movement.

13. A piercing method according to any one of claims 7 to 12, wherein, after the sealing membrane (18, 64) has been pierced, the piercing member (110, 604) and the receptacle (12, 60) are held stationary in the exit position for a predetermined period.

14. A piercing method according to any one of claims 7 to 13, wherein inserting the piercing member (110, 604) is performed at a first predetermined speed, and the piercing member (110, 604) is extracted at a second predetermined speed that is less than, equal to, or greater than the first predetermined speed.
